# FASCICULE DE BREVET EUROPEEN

(11) **EP 3 722 133 B1**
(45) Date de publication et mention de la délivrance du brevet: **27.07.2022**
(21) Numéro de dépôt: 20168730.8
(22) Date de dépôt: 08.04.2020
(51) Int. Cl.: B60K 11/08, F01P 7/10

(54) **DISPOSITIF D'AÉRATION POUR VÉHICULE AUTOMOBILE, ET PROCÉDÉ DE MONTAGE**
BELÜFTUNGSVORRICHTUNG FÜR KRAFTFAHRZEUG, UND MONTAGEVERFAHREN
VENTILATION DEVICE FOR MOTOR VEHICLE AND ASSEMBLY METHOD

(30) Priorité: 09.04.2019 FR 1903780
(43) Date de publication de la demande: 14.10.2020
(73) Titulaire: Flex-N-Gate France, 25405 Audincourt (FR)
(72) Inventeur: GUYON, Cyrille, 25600 NOMMAY (FR)
(74) Mandataire: Lavoix

(56) Documents cités:
- EP-A1- 3 272 565
- DE-A1-102009 058 760
- DE-A1-102011 004 169
- DE-A1-102014 106 605
- DE-A1-102017 105 568
- GB-A- 2 332 657
- US-A1- 2016 236 563

## Description

La présente invention concerne un dispositif d'aération pour un véhicule automobile, le dispositif d'aération comprenant :
- un cadre définissant une ouverture pour un flux d'air ayant une intensité et une direction par rapport au cadre, et
- au moins un volet monté rotatif par rapport au cadre autour d'un axe de pivotement entre une position ouverte, adaptée pour laisser passer le flux d'air, et une position fermée, adaptée pour réduire l'intensité du flux d'air ou modifier sa direction, le volet s'étendant selon l'axe de pivotement et ayant une première extrémité et une deuxième extrémité opposées selon l'axe de pivotement.

L'invention concerne également un procédé de montage de ce dispositif.

Un tel dispositif d'aération est destiné à gérer des flux d'air d'un véhicule automobile. Le dispositif est par exemple utilisé pour la gestion de la température du moteur du véhicule automobile, ou pour la gestion de l'aérodynamique du véhicule.

Le dispositif est par exemple agencé à l'avant du véhicule et fait avantageusement partie de la calandre du véhicule. Le dispositif d'aération permet la gestion d'un flux d'air entrant destiné à être en contact avec le système de refroidissement du moteur et à permettre de maintenir le moteur à une température optimale de fonctionnement. Un tel dispositif d'aération est la plupart du temps caché derrière une grille ou une calandre.

Le dispositif d'aération comprend en général une pluralité de volets maintenus parallèles les uns aux autres par un système d'actionnement approprié.

Les volets sont en général réalisés en un matériau thermoplastique dont la rigidité est limitée. Ceci limite en pratique la longueur maximale possible des volets entre leurs deux extrémités selon leurs axes de pivotement respectifs. Au-delà d'une longueur supérieure à 350 mm, il existe un risque de torsion des volets ou de déformations importantes sous l'effet du flux d'air.

Afin de réaliser des cadres possédant une extension plus grande selon l'un des axes de pivotement des volets, le cadre intègre un barreau fixe ménagé au centre selon l'axe de pivotement. Les volets sont montés rotatifs de part et d'autre du barreau central fixe. Dans cette configuration, le barreau central fait partie intégrante du cadre. Les volets sont classiquement encliquetés sur le cadre et sur le barreau central.

Une telle solution rend le montage des volets assez long, et ne permet pas de réellement mettre en oeuvre des volets de grande dimension. En effet, les volets sont montés dans le prolongement l'un de l'autre deux à deux, mais leur longueur individuelle, c'est-à-dire la distance entre le barreau central et le cadre, reste limitée. En outre, de tels volets, lorsqu'ils sont visibles sont parfois considérés comme inesthétiques.

Le document DE 10 2017 105568 A1 décrit un dispositif d'aération modulaire comprenant un cadre et un système de fermeture à volets.

Le document GB 2 332 657 A décrit un dispositif de liaison entre deux éléments mobiles en mouvement de translation, comportant deux organes de liaison, mâle et femelle, respectivement intégrés à ces deux éléments. Il s'applique par exemple à un dispositif d'aération pour véhicule automobile.

Un but de l'invention est de remédier à cet inconvénient, en proposant un dispositif d'aération permettant de mettre en oeuvre des volets de plus grande extension.

A cet effet, l'invention a pour objet un dispositif d'aération selon la revendication 1.

Selon des modes de réalisation particuliers, le dispositif d'aération comprend les caractéristiques correspondant aux revendications 2 à 8, prise(s) isolément ou selon toutes les combinaisons techniquement possibles telles que revendiquées.

L'invention a également pour objet un procédé de montage selon la revendication 9.

L'invention sera mieux comprise à la lecture de la description qui va suivre, donnée uniquement à titre d'exemple et faite en se référant aux dessins annexés, sur lesquels :
[Fig 1] la figure 1 est une vue en perspective, depuis le côté aval tel que défini par le flux d'air, d'un dispositif d'aération selon l'invention,
[Fig 2] la figure 2 est une vue en perspective, éclatée, du dispositif d'aération représenté sur la figure 1, et
[Fig 3] la figure 3 est une vue en perspective éclatée et, partielle, du dispositif d'aération représenté sur les figures 1 et 2, le dispositif étant vu depuis le côté amont.

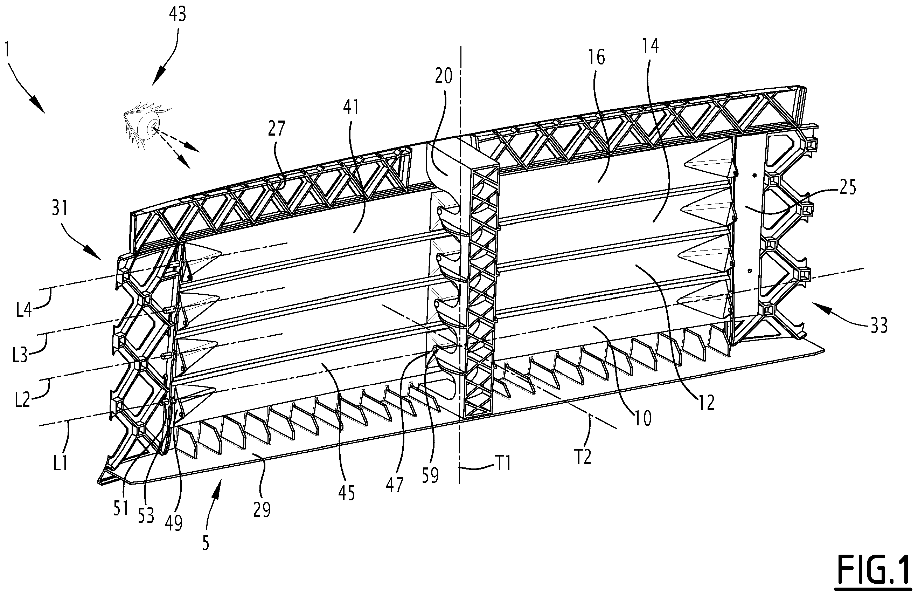

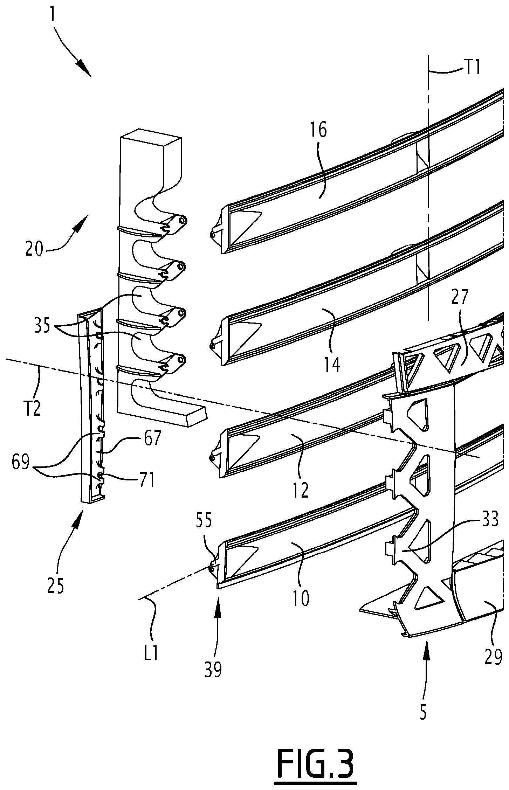

En référence aux figures 1 à 3, on décrit un dispositif d'aération 1 selon l'invention.

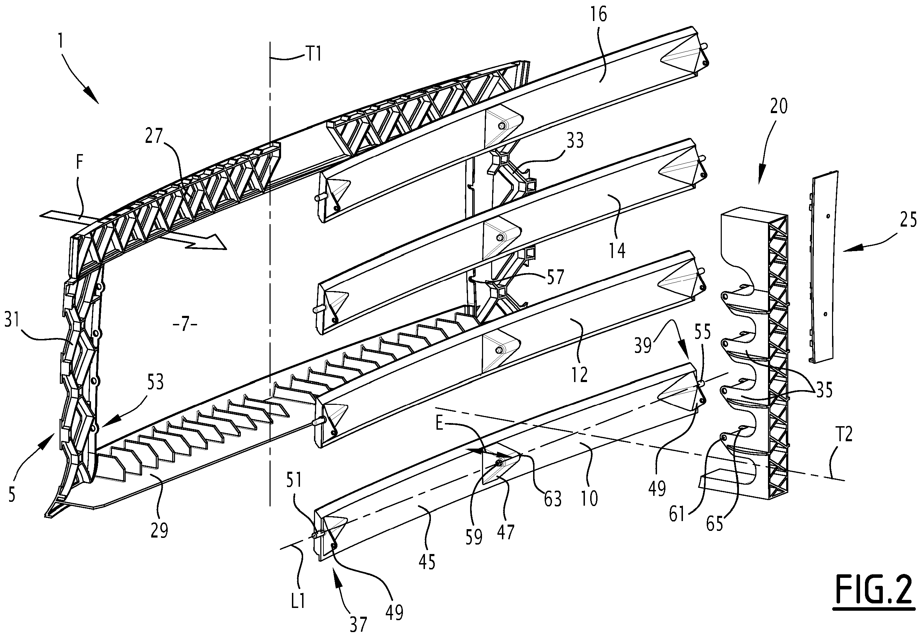

Le dispositif d'aération 1 est par exemple destiné à faire partie d'une calandre, d'une face avant technique ou d'un pare-chocs d'un véhicule automobile pour admettre un flux d'air F (figure 2) depuis l'extérieur du véhicule automobile vers l'intérieur.

Le dispositif d'aération 1 comprend un cadre 5 définissant une ouverture 7 pour le flux d'air F, une pluralité de volets 10, 12, 14, 16 montés rotatifs sur le cadre respectivement autour d'axes de pivotement L1, L2, L3, L4 entre une position fermée (représentée sur la figure 1), adaptée pour réduire l'intensité du flux d'air F ou modifier sa direction, et une position ouverte (non représentée, mais se déduisant de la position fermée par une rotation des volets autour de leurs axes de pivotement), adaptée pour laisser passer le flux d'air.

Le dispositif d'aération 1 comprend également un support intermédiaire 20 rapporté sur le cadre 5, et s'étendant selon un axe transversal T1, par exemple sensiblement perpendiculaire à l'axe de pivotement L1.

Avantageusement, le dispositif d'aération comprend en outre une pièce de maintien 25 rapportée sur le cadre 5 pour maintenir les volets 10 à 16 contre le cadre.

On définit également un axe T2 sensiblement perpendiculaire à l'axe de pivotement L1 et à l'axe transversal T1. L'axe T2 est donc sensiblement perpendiculaire à l'ouverture 7.

L'axe T2 est par exemple sensiblement parallèle à un axe avant-arrière du véhicule automobile (non représenté).

L'axe de pivotement L1 est par exemple sensiblement parallèle aux essieux (non représentés) du véhicule automobile.

L'axe transversal T1 est donc, dans l'exemple représenté, sensiblement vertical.

Selon une variante non représentée, l'axe T1 forme un certain angle avec la verticale et n'est plus perpendiculaire à l'axe T2.

Selon un mode de réalisation, dans la position fermée, l'intensité du flux d'air F est sensiblement nulle, c'est-à-dire que la position fermée est une position d'obturation complète.

Le cadre 5, les volets 10 à 16, le support intermédiaire 20 et l'éventuelle pièce de maintien 25 sont avantageusement réalisés en un matériau polymère par tous moyen industriel adapté, par exemple par injection dans des moules appropriés (non représentés).

Selon un mode de réalisation particulier, le cadre 5 est formé par une calandre du véhicule automobile.

Dans l'exemple représenté, l'ouverture 7 est sensiblement rectangulaire.

Selon des variantes non représentées, l'ouverture 7 peut présenter d'autres formes, notamment oblongues ou elliptiques.

Le cadre 5 comprend deux portions 27, 29 formant, dans l'exemple représenté, respectivement une poutre supérieure et une poutre inférieure sensiblement parallèles à l'axe de pivotement L1. Le cadre 5 comprend aussi deux portions 31, 33 formant, dans l'exemple représenté, deux montants dont la forme générale est sensiblement parallèle à l'axe transversal T1.

Les portions 27, 29, 31, 33 délimitent l'ouverture 7.

Le support intermédiaire 20 est fabriqué séparément du cadre 5 (c'est une pièce distincte du cadre).

Le support intermédiaire 20 forme par exemple un barreau.

En variante, des formes plus complexes sont possibles.

Selon une variante non représentée, le support intermédiaire 20 fait partie d'une autre pièce du véhicule, par exemple une face avant technique.

Le support intermédiaire relie avantageusement les portions 27, 29 du cadre 5 selon l'axe transversal T1. Le support intermédiaire 20 est par exemple vissé ou encliqueté respectivement sur ces portions.

Le support intermédiaire 20 comporte avantageusement des protubérances 35 s'étendant respectivement vers les volets 10 à 16 selon l'axe T2 et sur lesquelles les volets sont montés rotatifs respectivement autour des axes de pivotement L1 à L4.

Le support intermédiaire 20 est situé entre une première extrémité 37 et une deuxième extrémité 39 du volet 10 selon l'axe de pivotement L1. Avantageusement, le support intermédiaire 20 est situé sensiblement à égale distance de ces extrémités selon l'axe de pivotement L1.

Les volets 10 à 16 forment un système d'obturation de l'ouverture 7.

Dans l'exemple représenté, les axes de pivotement L1 à L4 sont sensiblement parallèles entre eux, et les volets 10 à 16 sont montés sur les portions 31, 33 du cadre 5, successivement selon l'axe transversal T1, avantageusement de manière régulièrement espacée selon cet axe.

Les volets 10 à 16 forment avantageusement un écran 41 (figure 1) dans la position fermée, adapté pour masquer le support intermédiaire 20 pour un observateur 43 situé de l'autre côté de l'écran par rapport au support intermédiaire selon l'axe T2.

Avantageusement, les volets 10 à 16 sont structurellement analogues les uns aux autres, et sont fixés sur le cadre 5 et le support intermédiaire 20 de manière analogue. Aussi, seul le volet 10 sera décrit en détail ci-après.

Le volet 10 comprend par exemple un corps 45 s'étendant depuis la première extrémité 37 jusqu'à la deuxième extrémité 39 selon l'axe de pivotement L1, et une portion de fixation 47 située entre la première extrémité et la deuxième extrémité, avantageusement sensiblement à égale distance des deux.

Le volet 10 comporte aussi, avantageusement, des attaches 49 en saillie, par exemple situées respectivement au niveau de la première extrémité 37 et de la deuxième extrémité 39, et destinées à permettre d'actionner le volet autour de l'axe de pivotement L1.

Selon un mode de réalisation particulier, il est envisageable de rendre fixe au moins l'un des volets 10 à 16, afin de permettre l'implantation, par exemple, d'une plaque police ou d'un LIDAR. Ce volet est par exemple rendu fixe par l'ajout d'un point de fixation supplémentaire sur au moins une des extrémités 37 et 39, ou en désalignant ses points de fixation de sorte que la rotation autour de l'axe de pivotement ne soit plus possible. Dans ce cas, le dispositif d'aération 1 comporte par exemple un ou plusieurs volets mobiles (analogues aux volets 10 à 16), et un ou plusieurs volets fixes.

Le corps 45 forme par exemple un ruban avantageusement arqué autour de l'axe transversal T1 dans la position fermée. Cette forme arquée se traduit par l'existence d'une flèche E du ruban par rapport à l'axe de pivotement L1 selon l'axe T2. Dit autrement, la première extrémité 37 et la deuxième extrémité 39 sont situées au niveau de l'axe de pivotement L1, tandis que le centre du corps 45 est situé à l'écart de l'axe de pivotement L1 d'une distance E selon l'axe T2.

La première extrémité 37 forme un premier pion 51. Le premier pion 51 est situé dans un premier logement 53 défini par la portion 31 du cadre 5. Le premier pion 51 et le premier logement 53 forment un premier pivot du volet 10 autour de l'axe de pivotement L1. Le premier pion 51 et le premier logement 53 sont configurés pour s'emboîter l'un dans l'autre selon l'axe de pivotement L1 lors d'une étape de montage du dispositif d'aération 1 qui sera décrite plus tard.

Le premier pion 51 présente par exemple une forme cylindrique axée sur l'axe de pivotement L1.

Le premier logement 53 est par exemple un simple orifice qui entoure avantageusement complètement le premier pion 51 autour de l'axe de pivotement L1.

Selon une variante non représentée, la première extrémité 37 du volet 10 forme un logement et la portion 31 du cadre 5 forme un pion de manière à réaliser le premier pivot.

La deuxième extrémité 39 forme un deuxième pion 55. Le deuxième pion 55 est situé dans un deuxième logement 57 formé en partie par la portion 33 du cadre 5 et par la pièce de maintien 25. Le deuxième pion 55 et le deuxième logement 57 forment un deuxième pivot autour de l'axe de pivotement L1 entre le volet 10 et le cadre 5. Le deuxième logement 57 est configuré pour recevoir le deuxième pion 55 lors d'une étape de montage du dispositif d'aération 1 après que le premier pion 51 a été inséré dans le premier logement 53, le deuxième pion étant reçu selon un axe sensiblement perpendiculaire à l'axe de pivotement L1, par exemple selon l'axe T2. Selon une variante non représentée, la deuxième extrémité 39 forme un logement et le cadre 5 forme un pion reçu dans ledit logement pour former le deuxième pivot.

Le deuxième logement 57 est par exemple formé par une encoche dans le cadre 5.

La portion de fixation 47 présente par exemple une forme de cale. La portion de fixation 47 est montée sur le support intermédiaire 20 par exemple de manière à réaliser une liaison pivot stricte autour de l'axe de pivotement L1, avec éventuellement la possibilité d'une légère translation du volet 10 par rapport au support intermédiaire 20 selon l'axe de pivotement L1.

La portion de fixation 47 forme un troisième pion 59. Le troisième pion 47 est situé dans un troisième logement 61 défini par l'une des protubérances 35 du support intermédiaire 20 de manière à former un troisième pivot autour de l'axe de pivotement L1 entre le volet 10 et le support intermédiaire 20. Le troisième pion 59 et le troisième logement 61 sont configurés pour s'emboîter l'un dans l'autre selon l'axe de pivotement L1 lors d'une étape de montage du volet 10 sur le support intermédiaire 20.

Le troisième logement 61 est par exemple un orifice entourant avantageusement complètement le troisième pion 59 autour de l'axe de pivotement L1.

Selon une variante non représentée, la portion de fixation 47 forme un logement et le support intermédiaire 20 forme un pion adapté pour coopérer avec ce logement pour constituer le troisième pivot.

La portion de fixation 47 forme en outre un quatrième pion 63. Le quatrième pion 63 est situé dans un quatrième logement 65 formé par ladite protubérance 35 du support intermédiaire 20 pour constituer un quatrième pivot autour de l'axe de pivotement L1 entre le volet 10 et le support intermédiaire. Le quatrième pion 63 est par exemple configuré pour s'encliqueter dans le quatrième logement 65 selon un axe sensiblement perpendiculaire à l'axe de pivotement L1, par exemple l'axe T2.

Selon une variante non représentée, la portion de fixation 47 forme un logement et le support intermédiaire 20 forme un pion situé dans le logement pour constituer le quatrième pivot.

Du fait que la portion de fixation 47 formant le troisième pion 59 et le quatrième pion 63 est prise entre le troisième logement 61 et le quatrième logement 65, le volet 20 n'est libre en rotation par rapport au support intermédiaire 20 qu'autour de l'axe de pivotement L1.

Le premier pion 51, le deuxième pion 55, le troisième pion 59 et le quatrième pion 63 sont sensiblement alignés selon l'axe de pivotement L1.

La pièce de maintien 25 est adaptée pour maintenir le deuxième pion 55 dans le logement 57. La pièce 25 comprend par exemple une partie principale 67 s'étendant selon l'axe transversal T1, et des protubérances 69 dirigées selon l'axe T2 à partir de la partie principale.

Selon une variante non représentée, le deuxième pion 55 est encliqueté dans le deuxième logement 57, et la pièce de maintien 25 n'est pas utilisée.

Selon une autre variante non représentée, la pièce de maintien est remplacée par un système à plusieurs pièces, chacune servant à maintenir l'un des volets.

Chacune des protubérances 69 forme un logement 71 adapté pour être appliqué contre le troisième pion 55 des volets 10 à 16 de manière à pousser ce dernier dans le troisième logement 57.

La pièce de maintien 25 est par exemple vissée ou encliquetée sur le cadre 5, avantageusement sur la portion 33.

Un procédé de montage du dispositif d'aération 1 va maintenant être décrit.

Au départ, les pièces constitutives du dispositif d'aération 1 sont séparées les unes des autres, par exemple comme représenté sur la figure 2.

Les volets 10 à 16 sont d'abord montés sur le support intermédiaire 20.

Pour chacun des volets, la partie de fixation 47 est montée sur l'une des protubérances 35. Pour ce faire, le troisième pion 59 est inséré dans le troisième logement 61 selon l'axe de pivotement L1. Puis, le quatrième pion 63 est encliqueté dans le quatrième logement 65.

A l'issue de ces opérations, le volet 10 se trouve monté pivotant sur le support intermédiaire 20, grâce aux troisième et quatrième pivots.

On procède de même pour les autres volets 12, 14, 16, qui prennent ainsi leurs positions relatives par rapport au support intermédiaire 20. Ceci permet de déplacer facilement l'ensemble formé par le support intermédiaire 20 et la pluralité de volets.

Ensuite, les volets 10 à 16 sont montés sur le cadre 5. Pour chacun des volets, le premier pion 51 est introduit dans le premier logement 53 respectivement selon les axes de pivotement L1, L2, L2, L4.

Ensuite, le deuxième pion 55 est introduit dans le deuxième logement 57 selon l'axe T2, et ce pour chacun des volets 10 à 16.

Le support intermédiaire 20 est fixé sur le cadre 5 par vissage ou encliquetage.

On fixe également la pièce de maintien 25 sur le cadre 5 pour retenir les deuxièmes pions 55 dans les deuxièmes logements 57.

En fonctionnement, on comprend que les volets 10 à 16 sont solidement maintenus sur le cadre 5 et sur le support intermédiaire 20.

Au côté de la première extrémité 37, le premier pion 51, après montage, ne peut pas s'écarter du premier logement 53 selon les directions perpendiculaires à l'axe de pivotement L1. Le seul degré de liberté permis pour le volet 10 est une rotation autour de l'axe de pivotement L1 par rapport au cadre 5, et éventuellement une légère translation selon l'axe de pivotement L1.

De même, le troisième pion 59 pivote dans le troisième logement 61 autour de l'axe de pivotement L1, mais ne peut pas s'écarter de l'axe de pivotement L1 selon les directions perpendiculaires à l'axe de pivotement.

Enfin, du côté de la deuxième extrémité 39, grâce à la pièce de maintien 25, le deuxième pion 55 pivote dans le deuxième logement 57, mais ne peut pas sortir de ce logement selon les directions perpendiculaires à l'axe de pivotement L1.

Grâce aux caractéristiques décrites ci-dessus, il est possible de fixer des volets de grande extension selon leur axe de pivotement, typiquement supérieure ou égale à 350 mm voire à 400 mm, sans risque de torsion des volets autour des axes de pivotement, ou plus généralement de déformation des volets qui nuirait au fonctionnement du dispositif d'aération.

En outre, grâce aux caractéristiques optionnelles selon lesquelles le premier logement 53 et le troisième logement 61 entourent complètement respectivement le premier pion 51 et le troisième pion 59, le volet 10 ne peut pas être déboîté respectivement du cadre 5 et du support intermédiaire 20 par une pression éventuelle d'un utilisateur sur ce volet perpendiculairement à l'axe de pivotement L1. Les volets 10 à 16 sont donc solidement maintenus par le cadre 5 et le support intermédiaire 20.

Grâce à la pièce de maintien 25 optionnelle, le deuxième pion 55 est également solidement maintenu dans le deuxième logement 57.

Avantageusement, le support intermédiaire 20 permet de déplacer collectivement la pluralité de volets 10 à 16 pendant le montage. La liaison pivot qui existe de manière avantageuse entre chacun des volets 10 à 16 et le support intermédiaire permet de donner aux volets leur orientation par rapport au support intermédiaire 20.

En outre, le support intermédiaire 20 est facilement caché par l'écran 41 formé par les volets 10 à 16 dans la position fermée pour l'observateur 43.

Les principaux avantages du dispositif d'aération 1 sont :
- une démontabilité réduite du système sans outil, c'est-à-dire un gain de sécurité en particulier lorsque les volets 10 à 16 sont visibles,
- un gain de raideur pour les volets 10 à 16 de grande dimension grâce au support intermédiaire 20,
- l'invisibilité du support intermédiaire 20 lorsque les volets sont dans la position fermée,
- un montage facile en usine,
- une robustesse en utilisation du fait de la difficulté à démonter le dispositif, de la raideur des volets et de la fiabilité de l'assemblage,
- une réduction des jeux fonctionnels par rapport à un montage par encliquetage complet,
- une meilleure cohésion entre les volets 10 à 16 et le cadre 5, et
- la possibilité de rendre fixe un ou plusieurs volets afin d'intégrer une plaque de police par exemple.

En outre, le support intermédiaire 20 peut être fabriqué séparément du cadre 5, ce qui permet de rendre le cadre et le volet éventuellement plus complexes sans dégrader la faisabilité des pièces.

Le support intermédiaire 20 peut être formé par une autre pièce du véhicule, par exemple une face avant technique ou une pièce de renfort d'un pare-chocs.

Le support intermédiaire 20 lie avantageusement les portions 27, 29 du cadre 5 et permet un transfert d'éventuels efforts verticaux. En outre, le support intermédiaire 20 peut être dimensionné pour absorber des chocs de type « parking » ou « piéton » ou être fusible.

L'utilisation d'un support intermédiaire amovible formant un barreau permet de le dimensionner au plus juste sans dégrader sa faisabilité. Il peut comprendre des zones de faiblesse à rupture programmée (zone fusible) pour atteindre des objectifs de raideur prédéfinis.

L'assemblage des volets à la première extrémité 37 et à la deuxième extrémité 39 est très robuste grâce à des jeux plus aisément contrôlables.

Grâce au support intermédiaire, les volets sont en outre plus esthétiques lorsqu'ils sont visibles par l'observateur 43.

## Revendications

1. Dispositif d'aération (1) pour un véhicule automobile, le dispositif d'aération (1) comprenant :
- un cadre (5) définissant une ouverture (7) pour un flux d'air (F) ayant une intensité et une direction par rapport au cadre (5),
- au moins un volet (10) monté rotatif par rapport au cadre (5) autour d'un axe de pivotement (L1) entre une position ouverte, adaptée pour laisser passer le flux d'air (F), et une position fermée, adaptée pour réduire l'intensité du flux d'air (F) ou modifier sa direction, le volet (10) s'étendant selon l'axe de pivotement (L1) et ayant une première extrémité (37) et une deuxième extrémité (39) opposées selon l'axe de pivotement (L1), chacune de la première extrémité (37) et de la deuxième extrémité (39) étant montée rotative sur le cadre (5) autour de l'axe de pivotement (L1), et
- un support intermédiaire (20) situé entre la première extrémité (37) et la deuxième extrémité (39) selon l'axe de pivotement (L1), le volet (10) étant monté rotatif sur le support intermédiaire (20) par rapport au cadre (5) autour de l'axe de pivotement (L1), le support intermédiaire (20) étant rapporté sur le cadre (5),
le volet comprenant un corps (45) s'étendant depuis la première extrémité (37) jusqu'à la deuxième extrémité (39) selon l'axe de pivotement (L1),
**caractérisé en ce que** le volet comprend en outre une portion de fixation (47) solidaire du corps (45) et formant l'un troisième pion (59) et d'un troisième logement (61), le support intermédiaire (20) formant l'autre d'un troisième pion (59) et d'un troisième logement (61), le troisième pion (59) étant situé dans le troisième logement (61) pour former un troisième pivot autour de l'axe de pivotement (L1) entre le volet (10) et le support intermédiaire (20), le troisième pion (59) et le troisième logement (61) étant configurés pour s'emboîter l'un dans l'autre selon l'axe de pivotement (L1) lors d'une étape de montage du volet (10) sur le support intermédiaire (20).

2. Dispositif d'aération (1) selon la revendication 1, dans lequel le support intermédiaire (20) relie deux portions (27, 29) du cadre (5) selon un axe transversal (T1) sensiblement perpendiculaire à l'axe de pivotement (L1), les deux portions (27, 29) étant séparées par l'ouverture (7) selon l'axe transversal (T1), le support intermédiaire (20) étant de préférence vissé ou encliqueté sur chacune de deux portions (27, 29) du cadre (5).

3. Dispositif d'aération (1) selon la revendication 1 ou 2, comprenant une pluralité de volets (10, 12, 14, 16) montés rotatifs sur le cadre (5) respectivement autour d'axes de pivotement (L1, L2, L3, L4) entre une position ouverte, adaptée pour laisser passer le flux d'air (F), et une position fermée, adaptée pour réduire l'intensité du flux d'air (F) ou modifier sa direction, les volets (10, 12, 14, 16) formant un écran (41) adapté pour masquer le support intermédiaire (20) pour un observateur (43) situé de l'autre côté de l'écran (41) par rapport au support intermédiaire (20) selon un axe (T2) sensiblement perpendiculaire à l'ouverture (7).

4. Dispositif d'aération (1) selon l'une quelconque des revendications 1 à 3, dans lequel :
- la première extrémité (37) dudit volet (10) forme l'un d'un premier pion (51) et d'un premier logement (53), et le cadre (5) forme l'autre d'un premier pion (51) et d'un premier logement (53), le premier pion (51) étant situé dans le premier logement (53) pour former un premier pivot autour de l'axe de pivotement (L1) entre le volet (10) et le cadre (5), le premier pion (51) et le premier logement (53) étant configurés pour s'emboîter l'un dans l'autre selon l'axe de pivotement (L1) lors d'une étape de montage du dispositif d'aération (1), et
- la deuxième extrémité (39) forme l'un d'un deuxième pion (55) et d'un deuxième logement (57), le cadre (5) formant l'autre d'un deuxième pion (55) et d'un deuxième logement (57), le deuxième pion (55) étant situé dans le deuxième logement (57) pour former au moins en partie un deuxième pivot autour de l'axe de pivotement (L1) entre le volet (10) et le cadre (5).

5. Dispositif d'aération (1) selon la revendication 4, dans lequel le premier logement (53) entoure complètement le premier pion (51) autour de l'axe de pivotement (L1).

6. Dispositif d'aération (1) selon la revendication 4 ou 5, dans lequel le deuxième logement (57) est configuré pour recevoir le deuxième pion (55) lors d'une étape de montage du dispositif d'aération (1) après que le premier pion (51) a été inséré dans le premier logement (53), le deuxième pion (55) étant reçu dans le deuxième logement (57) selon un axe (T2) sensiblement perpendiculaire à l'axe de pivotement (L1), le dispositif d'aération (1) comprenant de préférence au moins une pièce de maintien (25) rapportée sur le cadre (5) pour maintenir le deuxième pion (55) dans le deuxième logement (57) selon ledit axe (T2).

7. Dispositif d'aération (1) selon l'une quelconque des revendications 1 à 6, dans lequel le troisième logement (61) entoure complètement le troisième pion (59) autour de l'axe de pivotement (L1).

8. Dispositif d'aération (1) selon l'une quelconque des revendications 1 à 7, dans lequel la portion de fixation forme l'un d'un quatrième pion (63) et d'un quatrième logement (65), le support intermédiaire (20) formant l'autre d'un quatrième pion (63) et d'un quatrième logement (65), le quatrième pion (63) étant situé dans le quatrième logement (65) pour former un quatrième pivot autour de l'axe de pivotement (L1) entre le volet (10) et le support intermédiaire (20), le quatrième pion (63) étant configuré pour s'encliqueter dans le quatrième logement (65) selon un axe (T2) sensiblement perpendiculaire à l'axe de pivotement (L1).

9. Procédé de montage d'un dispositif d'aération (1) selon l'une quelconque des revendications 1 à 8, comprenant au moins les étapes suivantes :
- montage du volet (10) rotatif sur le support intermédiaire (20),
- montage de la première extrémité (37) du volet (10) sur le cadre (5),
- montage de la deuxième extrémité (39) du volet (10) sur le cadre (5), et
- fixation du support intermédiaire (20) sur le cadre (5).

## Patentansprüche

1. Belüftungsvorrichtung (1) für ein Kraftfahrzeug, die Belüftungsvorrichtung (1) umfassend:
- einen Rahmen (5), der eine Öffnung (7) für einen Luftstrom (F) definiert, der eine Intensität und eine Richtung in Bezug auf den Rahmen (5) aufweist,
- mindestens eine Klappe (10), die in Bezug auf den Rahmen (5) um eine Schwenkachse (L1) zwischen einer offenen Position, die angepasst ist, um den Luftstrom (F) durchzulassen, und einer geschlossenen Position, die angepasst ist, um die Intensität des Luftstroms (F) zu verringern oder seine Richtung zu ändern, drehbar montiert ist, wobei sich die Klappe (10) entlang der Schwenkachse (L1) erstreckt und ein erstes Ende (37) und ein zweites Ende (39) aufweist, die sich entlang der Schwenkachse (L1) gegenüberliegen, wobei jedes von dem ersten Ende (37) und dem zweiten Ende (39) drehbar um die Schwenkachse (L1) an dem Rahmen (5) montiert sind, und
- einen Zwischenhalter (20), der sich zwischen dem ersten Ende (37) und dem zweiten Ende (39) entlang der Schwenkachse (L1) befindet, wobei die Klappe (10) an dem Zwischenhalter (20) in Bezug auf den Rahmen (5) drehbar um die Schwenkachse (L1) montiert ist, wobei der Zwischenhalter(20) an dem Rahmen (5) angebracht ist,
die Klappe umfassend einen Körper (45), der sich entlang der Schwenkachse (L1) von dem ersten Ende (37) zu dem zweiten Ende (39) erstreckt,
**dadurch gekennzeichnet, dass** die Klappe ferner einen Befestigungsabschnitt (47) umfasst, der fest mit dem Körper (45) verbunden ist und den einen dritten Zapfen (59) und eine dritte Aufnahme (61) bildet, wobei der Zwischenhalter (20) den anderen eines dritten Zapfens (59) und einer dritten Aufnahme (61) bildet, wobei sich der dritte Zapfen (59) in der dritten Aufnahme (61) befindet, um einen dritten Drehpunkt um die Schwenkachse (L1) zwischen der Klappe (10) und dem Zwischenhalter (20) zu bilden, wobei der dritte Zapfen (59) und die dritte Aufnahme (61) konfiguriert sind, um in einem Montageschritt der Klappe (10) an dem Zwischenhalter (20) entlang der Schwenkachse (L1) ineinanderzugreifen.

2. Belüftungsvorrichtung (1) nach Anspruch 1, wobei der Zwischenhalter (20) zwei Abschnitte (27, 29) des Rahmens (5) entlang einer Querachse (T1) im Wesentlichen senkrecht zu der Schwenkachse (L1) verbindet, wobei die zwei Abschnitte (27, 29) durch die Öffnung (7) entlang der Querachse (T1) getrennt sind, wobei der Zwischenhalter (20) vorzugsweise auf jeden der zwei Abschnitte (27, 29) des Rahmens (5) geschraubt oder eingerastet ist.

3. Belüftungsvorrichtung (1) nach Anspruch 1 oder 2, umfassend eine Vielzahl von Klappen (10, 12, 14, 16), die jeweils drehbar um Schwenkachsen (L1, L2, L3, L4) zwischen einer offenen Position, die angepasst ist, um den Luftstrom (F) durchzulassen, und einer geschlossenen Position drehbar angebracht sind, die angepasst ist, um die Intensität des Luftstroms (F) zu verringern oder seine Richtung zu ändern, an dem Rahmen (5) montiert sind, wobei die Klappen (10, 12, 14, 16) einen Schirm (41) bilden, der angepasst ist, um den Zwischenhalter (20) für einen Betrachter (43) zu verdecken, der sich in Bezug auf den Zwischenhalter (20) gemäß einer Achse (T2), die im Wesentlichen senkrecht zu der Öffnung (7) ist, auf der anderen Seite des Schirms (41) befindet.

4. Belüftungsvorrichtung (1) nach einem der Ansprüche 1 bis 3, wobei:
- das erste Ende (37) der Klappe (10) eines von einem ersten Zapfen (51) und einer ersten Aufnahme (53) bildet, und der Rahmen (5) das andere von einem ersten Zapfen (51) und einer ersten Aufnahme (53) bildet, wobei sich der erste Zapfen (51) in der ersten Aufnahme (53) befindet, um einen ersten Drehpunkt um die Schwenkachse (L1) zwischen der Klappe (10) und dem Rahmen (5) zu bilden, wobei der erste Zapfen (51) und die erste Aufnahme (53) konfiguriert sind, um in einem Montageschritt der Belüftungsvorrichtung (1) entlang der Schwenkachse (L1) ineinanderzugreifen, und
- das zweite Ende (39) eines von einem zweiten Zapfen (55) und einer zweiten Aufnahme (57) bildet, wobei der Rahmen (5) das andere von einem zweiten Zapfen (55) und einer zweiten Aufnahme (57) bildet, wobei sich der zweite Zapfen (55) in dem zweiten Gehäuse (57) befindet, um zwischen der Klappe (10) und dem Rahmen (5) zumindest teilweise einen zweiten Drehpunkt um die Schwenkachse (L1) zu bilden.

5. Belüftungsvorrichtung (1) nach Anspruch 4, wobei die erste Aufnahme (53) den ersten Zapfen (51) um die Schwenkachse (L1) vollständig umgibt.

6. Belüftungsvorrichtung (1) nach Anspruch 4 oder 5, wobei die zweite Aufnahme (57) konfiguriert ist, um den zweiten Zapfen (55) in einem Montageschritt der Belüftungsvorrichtung (1) aufzunehmen, nachdem der erste Zapfen (51) in die erste Aufnahme (53) eingesetzt wurde, wobei der zweite Zapfen (55) entlang einer Achse (T2) in der zweiten Aufnahme (57) aufgenommen wird, die im Wesentlichen senkrecht zu der Schwenkachse (L1) ist, die Belüftungsvorrichtung (1) vorzugsweise umfassend mindestens ein am Rahmen (5) angebrachtes Halteteil (25), um den zweiten Zapfen (55) entlang der Achse (T2) in der zweiten Aufnahme (57) zu halten.

7. Belüftungsvorrichtung (1) nach einem der Ansprüche 1 bis 6, wobei die dritte Aufnahme (61) den dritten Zapfen (59) um die Schwenkachse (L1) vollständig umgibt.

8. Belüftungsvorrichtung (1) nach einem der Ansprüche 1 bis 7, wobei der Befestigungsabschnitt das eine von einem vierten Zapfen (63) und einer vierten Aufnahme (65) bildet, wobei der Zwischenhalter (20) das andere von einem vierten Zapfen (63) und einer vierten Aufnahme (65) bildet, wobei sich der vierte Zapfen (63) in der vierten Aufnahme (65) befindet, um zwischen der Klappe (10) und dem Zwischenhalter (20) einen vierten Drehpunkt um die Schwenkachse (L1) zu bilden, wobei der vierte Zapfen (63) konfiguriert ist, um in die vierte Aufnahme (65) entlang einer Achse (T2) einzurasten, die im Wesentlichen senkrecht zu der Schwenkachse (L1) ist.

9. Verfahren zur Montage einer Belüftungsvorrichtung (1) nach einem der Ansprüche 1 bis 8, umfassend mindestens die folgenden Schritte:
- Montieren der drehbaren Klappe (10) an dem Zwischenhalter (20),
- Montieren des ersten Endes (37) der Klappe (10) an dem Rahmen (5),
- Montieren des zweiten Endes (39) der Klappe (10) an dem Rahmen (5), und
- Befestigen des Zwischenhalters (20) an dem Rahmen (5).

## Claims

1. A ventilation device (1) for a motor vehicle, the ventilation device (1) comprising:
- a frame (5) defining an opening (7) for an air flow (F) having an intensity and a direction relative to the frame (5),
- at least one flap (10) mounted rotating relative to the frame (5) about a pivot axis (L1) between an open position, suitable for allowing the air flow (F) to pass, and a closed position, suitable for reducing the intensity of the air flow (F) or changing its direction, the flap (10) extending along the pivot axis (L1) and having a first end (37) and a second end (39) that are opposite one another along the pivot axis (L1),
- each of the first end (37) and the second end (39) being mounted rotating on the frame (5) about the pivot axis (L1), and
- an intermediate support (20) located between the first end (37) and the second end (39) along the pivot axis (L1), the flap (10) being mounted rotating on the intermediate support (20) relative to the frame (5) about the pivot axis (L1), the intermediate support (20) being attached on the frame (5),
the flap comprising a body (45) extending from the first end (37) to the second end (39) along the pivot axis (L1),
**characterized in that** the flap further comprises a fastening portion (47) secured to the body (45) and forming a third pin (59) and a third housing (61), the intermediate support (20) forming the other of a third pin (59) and a third housing (61), the third pin (59) being located in the third housing (61) to form a third pivot about the pivot axis (L1) between the flap (10) and the intermediate support (20), the third pin (59) and the third housing (61) being configured to nest one in the other along the pivot axis (L1) during a step for assembling the flap (10) on the intermediate support (20).

2. The ventilation device (1) according to claim 1, wherein the intermediate support (20) couples two portions (27, 29) of the frame (5) along a transverse axis (T1) substantially perpendicular to the pivot axis (L1), the two portions (27, 29) being separated by the opening (7) along the transverse axis (T1), the intermediate support (20) preferably being screwed or snapped on each of two portions (27, 29) of the frame (5).

3. The ventilation device (1) according to claim 1, or 2, comprising a plurality of flaps (10, 12, 14, 16) mounted rotating on the frame (5) respectively about pivot axes (L1, L2, L3, L4) between an open position, suitable for allowing the air flow (F) to pass, and a closed position, suitable for reducing the intensity of the air flow (F) or changing its direction, the flaps (10, 12, 14, 16) forming a screen (41) suitable for hiding the intermediate support (20) for an observer (43) located on the other side of the screen (41) relative to the intermediate support (20) along an axis (T2) substantially perpendicular to the opening (7).

4. The ventilation device (1) according to any one of claims 1 to 3, wherein:
- the first end (37) of said flap (10) forms one of a first pin (51) and a first housing (53), and the frame (5) forms the other of a first pin (51) and a first housing (53), the first pin (51) being located in the first housing (53) in order to form a first pivot about the first pivot axis (L1) between the flap (10) and the frame (5), the first pin (51) and the first housing (53) being configured to nest one in the other along the pivot axis (L1) during a step for assembling the ventilation device (1), and
- the second end (39) forms one of a second pin (55) and a second housing (57), the frame (5) forming the other of a second pin (55) and a second housing (57), the second pin (55) being located in the second housing (57) in order to form at least part of a second pivot about the pivot axis (L1) between the flap (10) and the frame (5).

5. The ventilation device (1) according to claim 4, wherein the first housing (53) completely surrounds the first pin (51) about the pivot axis (L1).

6. The ventilation device (1) according to claim 4 or 5, wherein the second housing (57) is configured to receive the second pin (55) during a step for assembling the ventilation device (1) after the first pin (51) has been inserted in the first housing (53), the second pin (55) being received in the second housing (57) along an axis (T2) substantially perpendicular to the pivot axis (L1), the ventilation device (1) preferably comprising at least one holding part (25) attached on the frame (5) in order to keep the second pin (55) in the second housing (57) along said axis (T2).

7. The ventilation device (1) according to any one of claims 1 to 6, wherein the third housing (61) completely surrounds the third pin (59) about the pivot axis (L1).

8. The ventilation device (1) according to any one of claims 1 to 7, wherein the fastening portion forms one of a fourth pin (63) and a fourth housing (65), the intermediate support (20) forming the other of a fourth pin (63) and a fourth housing (65), the fourth pin (63) being located in the fourth housing (65) in order to form a fourth pivot about the pivot axis (L1) between the flap (10) and the intermediate support (20), the fourth pin (63) being configured to snap in the fourth housing (65) along an axis (T2) substantially perpendicular to the pivot axis (L1).

9. A method for mounting a ventilation device (1) according to any one of claims 1 to 8, comprising at least the following steps:
- mounting the rotary flap (10) on the intermediate support (20),
- mounting the first end (37) of the flap (10) on the frame (5),
- mounting the second end (39) of the flap (10) on the frame (5), and
- fastening the intermediate support (20) on the frame (5).
